# EUROPEAN PATENT APPLICATION

(11) **EP 3 220 636 A1**
(43) Date of publication of application: **20.09.2017**
(21) Application number: 15868891.1
(22) Date of filing: 10.04.2015
(51) Int. Cl.: H04N 7/18

(54) **VIDEO MONITORING METHOD AND DEVICE**

(30) Priority: 18.12.2014 CN 201410802364
(71) Applicant: ZTE Corporation, Shenzhen, Guangdong 518057 (CN)
(72) Inventor: DENG, Shuo, Shenzhen Guangdong 518057 (CN)
(74) Representative: Awapatent AB
(86) International application number: PCT/CN2015/076309
(87) International publication number: WO 2016/095374

(57) **Abstract**

A video monitoring method and device are provided. The method includes obtaining a video image data and a group to which a member belongs; screening the obtained video image data according to a permission mapping table and the obtained group; and displaying the screened video image data on a video monitor. With the embodiments of the present invention, by reconstructing video monitoring contents and generating the video data required by a user according to the customization of different types of member groups, on the one hand, the purpose of the personalized browsing and privacy protection of the customized content is achieved to better ensure the security of video monitoring, thereby protecting the privacy of the video monitoring contents; on the other hand, actual workload of monitoring personnel is greatly reduced without reducing user perception, the transmission bandwidth is saved.

## Description

### Technical Field

Embodiments of the present invention relate to monitoring techniques, and more particularly, to a video monitoring method and device.

### Background

With the development of video monitoring applications and the popularity of terminal equipment, monitoring systems geared to medium-sized and small enterprises and home security have been developed greatly by combining with the mobile Internet, and a large number of applications (APPs) combining with web cameras and smart phone terminals have been launched one after another.

Such applications usually connect the network cameras and the smart phone terminals through video monitoring systems to complete collection, monitoring and management of video contents, thereby satisfying people's application demand for security, management, familial affection and sharing. However, they also bring some problems, mainly including: content privacy protection problem brought when videos are shared with or permission of camera is given to other accounts; or whether there may be a scheme in which monitoring of personalized browsing and management of video contents can be implemented according to requirements customized by different types of members. Therefore, how to achieve more secure video monitoring is a problem to be solved urgently.

### Summary

In order to solve the above technical problems, embodiments of the present invention provide a video monitoring method and device capable of better ensuring the security of video monitoring, thereby protecting the privacy of video monitoring contents.

In order to achieve the above object, an embodiment of the present invention provides a video monitoring method including:
obtaining video image data and a group to which a member belongs;
screening the obtained video image data according to a permission mapping table and the obtained group; and
displaying the screened video image data on a video monitor.

In an exemplary embodiment, before obtaining the video image data, the method further includes: presetting the permission mapping table; herein a permission corresponding to each member group is configured in a filtering rule of the permission mapping table.

In an exemplary embodiment, obtaining the video image data includes: collecting the video image data; and preprocessing the collected video image data.

In an exemplary embodiment, preprocessing the collected video image data includes:
extracting a background and a moving object foreground of the collected video image data; and identifying and annotating the extracted background and moving object foreground on a video image.

In an exemplary embodiment, screening the obtained video image data includes:
screening the background and moving object foreground of the video image data according to the permission of the corresponding member group configured in the filtering rule of the permission mapping table.

In an exemplary embodiment, displaying the screened video image data on the video monitor includes: fusing and encoding the moving object foreground and the corresponding background meeting a screening condition into a video stream; and sending the video stream to the video monitor for displaying.

An embodiment of the present invention further provides a video monitoring device including at least:
an obtaining module configured to obtain video image data and a group to which a member belongs;
a screening module configured to screen the obtained video image data according to a permission mapping table and the obtained group; and
a displaying module configured to display the screened video image data on a video monitor.

In an exemplary embodiment, the device further includes: a presetting module configured to preset the permission mapping table, herein a permission corresponding to each member group is configured in a filtering rule of the permission mapping table.

In an exemplary embodiment, the obtaining module includes a collecting unit and a preprocessing unit, herein the collecting unit is configured to collect the video image data; and the preprocessing unit is configured to preprocess the collected video image data.

In an exemplary embodiment, the preprocessing unit includes at least an extraction subunit and an identification subunit, herein the extraction subunit is configured to extract a background and a moving object foreground of the collected video image data; and the identification subunit is configured to identify and annotate the extracted background and moving object foreground.

In an exemplary embodiment, the screening module is specifically configured to: screen the background and moving object foreground of the video image data according to the permission of the corresponding member group configured in the filtering rule of the permission mapping table.

In an exemplary embodiment, the displaying module includes at least a fusing unit and a sending unit, herein the fusing unit is configured to fuse and encode the moving object foreground and the corresponding background meeting a screening condition into a video stream; and the sending unit is configured to send the obtained video stream to the video monitor for displaying.

The video monitoring method provided by the embodiment of the present invention includes obtaining a video image data and a group to which a member belongs; screening the obtained video image data according to a permission mapping table and the obtained group; and displaying the screened video image data on a video monitor. The embodiments of the present invention reconstructs video monitoring contents and generates the video data required by a user according to the customization of different types of member groups to achieve the purpose of the personalized browsing and privacy protection of the customized content, greatly reducing actual workload of monitoring personnel and saving transmission bandwidth.

### Brief Description of the Drawings

The drawings described here are used for providing further understanding about the present invention and constitute a part of the present invention. The exemplary embodiments of the present invention and the description thereof are used for explaining the present invention instead of improperly limiting the present invention. In the drawings:
FIG. 1 is a flowchart of a first embodiment of a video monitoring method according to the present invention.
FIG. 2 is a flowchart of a second embodiment of a video monitoring method according to the present invention.
FIG. 3 is a schematic flow diagram of implementation of obtaining video image data in FIG. 1.
FIG. 4 is a schematic flow diagram of implementation of preprocessing the collected video image data in FIG. 3.
FIG. 5 is a flowchart of a third embodiment of a video monitoring method according to the present invention.
FIG. 6 is a schematic flow diagram of implementation of displaying the screened video image data on the video monitor in FIG. 1.
FIG. 7 is a composition structure of a first embodiment of a video monitoring device according to the present invention.
FIG. 8 is a composition structure of a second embodiment of a video monitoring device according to the present invention.
FIG. 9 is a composition structure of an obtaining module in FIG. 7.
FIG. 10 is a composition structure of a preprocessing module in FIG. 9.
FIG. 11 is a composition structure of a displaying module in FIG. 7.

### Detailed Description

In order to make purposes, technical schemes and advantages of embodiments of the present invention clearer, the embodiments of the present invention will be described below in detail in conjunction with the accompanying drawings. It should be illustrated that, under the situation of no conflict, the embodiments and the features in the embodiments in the present application can be freely combined.

It should be understood that, the specific embodiments described here are only used to explain the present invention, which is not used to limit the present invention.

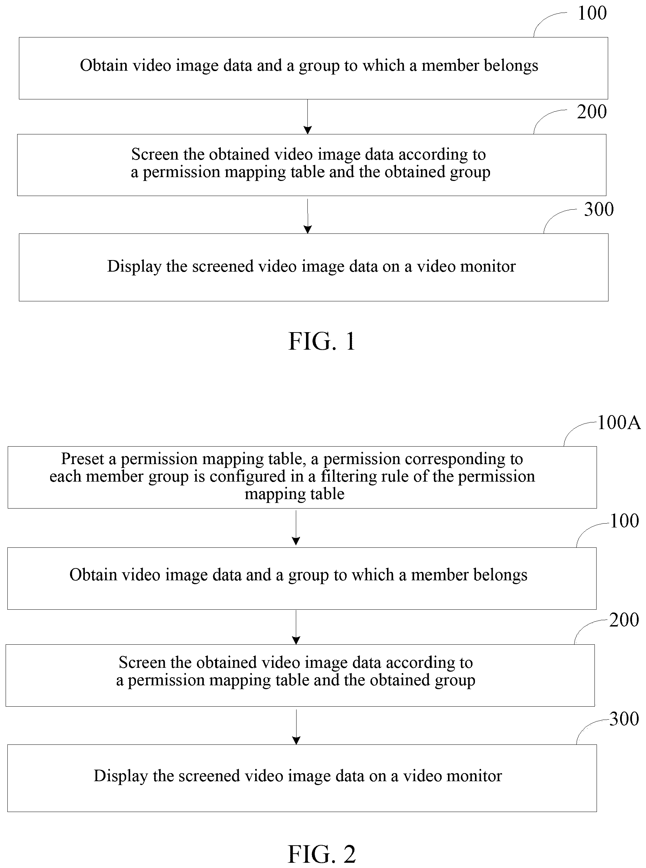

FIG. 1 is a flowchart of a first embodiment of a video monitoring method according to the present invention. As shown in FIG. 1, in the first embodiment, the method includes the following steps.

In Step 100, video image data and a group to which a member belongs are obtained.

It should be noted that a video monitoring system includes a collection front-end, a service processing server and a client.

A video monitoring device collects the video image data by the collection front-end. In the embodiment, the collection front-end can be a 360-degree-rotatable luminous camera to intelligently collect video images at any angle in the night environment. Furthermore, an optical flow method or interframe difference method or background difference method is used to dynamically extract a background and moving object foreground of the video image data, face recognition is performed by a facial feature method to identify a specific person or animal in the moving objects, the moving objects are further tracked to obtain the video image data of a specific object for storing in a database.

Prior to this step, the method further includes: the video monitoring device may log in to the service processing server through a client administrator account of a WEB or application, and establish different members and member groups to divide the different members into corresponding member groups. Thus, the group to which the current member belongs can be determined according to a current member such as identification information in this step.

In Step 200, the obtained video image data is screened according to a permission mapping table and the obtained group.

The video monitoring device presets the permission mapping table and screens the obtained video images via the service processing server according to permissions of corresponding member groups configured in a filtering rule of the permission mapping table. For example, the member groups may be divided into a member group 1, a member group 2 and a member group 3. The member group 1 is set to track only specific persons, the member group 2 is set to track only specific valuables, and the member group 3 is set to track only license plate numbers of users. There is no limit to the number of members in each member group, i.e., there may be no member joining the member group, or multiple members can join the member group. Each member may join a number of groups after authorization and authentication. For example, after authorization and authentication, a member A may join the member group 1, the member group 2 and the member group 3 separately, or may join the member group 1, the member group 2 and the member group 3 at the same time. If the ranking of the member A is high, the permission mapping table may be modified to change a permission of the located member group.

The video monitoring device screens the video image data according to the filtering rule of the permission mapping table. For example, if the member A is divided into the member group 1, then video image data of a corresponding specific person will be screened according to the permission mapping table so that only the video image data of a corresponding specific person can be monitored within the video monitoring permission of the member A.

In Step 300, the screened video image data is displayed on a video monitor.

The video monitoring device sends the screened video image data to a customer server, and a video stream of the screened video image is decoded by the customer server, and then presented through an interactive interface of the video monitor for the user to monitor and view.

With the video monitoring method provided by the present embodiment, by reconstructing video monitoring contents and screening the video data required by a user according to the customization of different types of member groups, on the one hand, the purpose of the personalized browsing and privacy protection of the customized content is achieved to better ensure the security of video monitoring, thereby protecting the privacy of the video monitoring contents; on the other hand, actual workload of monitoring personnel is greatly reduced without reducing user perception, the transmission bandwidth is saved.

FIG. 2 is a flowchart of a second embodiment of a video monitoring method according to the present invention. As shown in FIG. 2, on the basis of the first embodiment, before step 100, the video monitoring method provided in the second embodiment includes the following step.

In Step 100A, a permission mapping table is preset, a permission corresponding to each member group is configured in a filtering rule of the permission mapping table.

The permission corresponding to each member group is configured in the filtering rule of the permission mapping table. Each member can correspond to multiple member groups such that each member can correspond to multiple permissions to form a many-to-many mapping. For example, the member group 1 is set to track only specific persons, the member group 2 is set to track only specific valuables, and the member group 3 is set to track only license plate numbers of users. If the member A corresponds to the member group 1 and the member group 2, videos of specific persons and specific valuables can be monitored. In addition, members with high ranking can modify the permission mapping table, and modify the permission of the corresponding member group. For example, when the member A has the highest ranking and is currently in the member group 2, the set permission of the member group 2 for tracking only specific valuables can be modified to the permission for tracking only specific animals.

In the video monitoring method provided by the present embodiment, by presetting the permission mapping table, screening the collected video image data, and screening out the video data required by the user according to the customization of different types of member groups, on the one hand, the purpose of the personalized browsing and privacy protection of the customized content is achieved to better ensure the security of video monitoring, thereby protecting the privacy of the video monitoring contents; on the other hand, actual workload of monitoring personnel is greatly reduced without reducing user perception, the transmission bandwidth is saved.

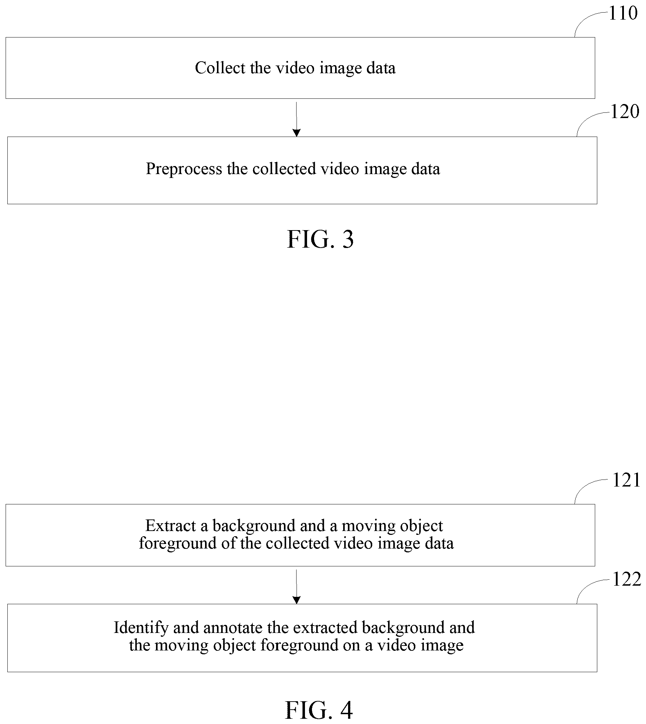

FIG. 3 is a schematic flow diagram of implementation of obtaining of video image data in FIG. 1, which, as shown in FIG. 3, includes the following steps.

In Step 110, the video image data is collected.

In this step, the video monitoring device will collect the video data through the collection front end when receiving control instructions sent from the service processing server. The collection front end can be a 360-degree-rotatable luminous camera to intelligently collect video images at any angle in the night environment.

In Step 120, the collected video image data is preprocessed.

The video monitoring device preprocesses the collected video image data through the collection front end. For example, the optical flow method or interframe difference method or background difference method can be used to dynamically extract a background and moving object foreground of the video image data, face recognition is performed by the facial feature method to identify a specific person or animal in the moving objects, the moving objects are further tracked to obtain the video image data of the specific object for storing in the database. Collection is performed with respect to backgrounds in various angles, and a background of an angle corresponding to the video image data is stored in the database.

FIG. 4 is a schematic flow diagram of implementation of preprocessing of the collected video image data in FIG. 3, which, as shown in FIG. 4, includes the following steps.

In Step 121, a background and a moving object foreground of the collected video image data are extracted.

The video monitoring device separates the foreground and the background of the current video image data by using a moving object detection method, such as the optical flow method, and extracts the foreground moving object to identify a contour of the moving object. It should be noted that the optical flow method is only an example here, and of course the present invention is not limited thereto, other methods, such as the interframe difference method or background difference method, can also be used.

In Step 122, the extracted background and the moving object foreground are identified and annotated on a video image.

The video monitoring device identifies and extracts the principal contour of the moving object, processes a preview frame sequence of a continuously moving object, and detects a possible foreground object by using an object detecting method for the preview frame sequence, and if the foreground object appears in a frame, finds its representative key feature points. The key feature points can be randomly generated, or be made of angular points, which are local maximum points of curvature on the principal contour and play a decisive role in grasping features of the principal contour. Once the contour features of the moving object are found, the shape of the object is roughly grasped. Features of the angular points are important features of the image. In various image features, the angular points have advantages of rotation invariability and not changing with illumination condition changing. In object recognition and object tracking, the amount of data involved in calculation can be reduced without loss of important grayscale information of the image, performing matching by using the features of the angular points can greatly improve the matching speed. For any subsequent two adjacent video frames, the optimal positions of the key feature points which appear in the previous frame, in the current frame are found to obtain position coordinates of the moving object in the current frame. This process is performed iteratively to achieve tracking of the moving object in the foreground, and separate the obtained foreground and background so as to filter some objects, screen out the required video image data, and identify the moving object in the foreground.

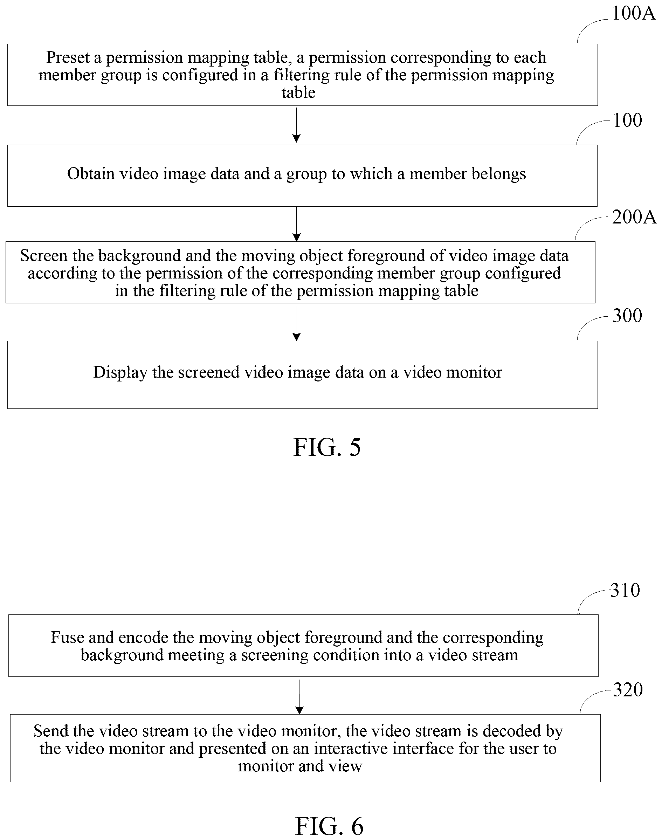

FIG. 5 is function modules of a third embodiment of a video monitoring method according to the present invention. As shown in FIG. 5, on the basis of the first embodiment or the second embodiment (FIG. 5 shows the basis of the second embodiment), step 200 specifically includes the following step.

In Step 200A, the background and the moving object foreground of the video image data are screened according to the permission of the corresponding member group configured in the filtering rule of the permission mapping table.

The video monitoring device obtains the permission of the corresponding member group from the filtering rule according to the preset permission mapping table, and screens the extracted background and moving object foreground according to the permission of the corresponding member group. For example, the member group 1 screens specific persons in the video image data, the member group 2 screens specific valuables in the video image data, and the member group 3 tracks license plate numbers of users in the video image data. Thus, the specific persons, cars and things are identified.

FIG. 6 is a schematic flow diagram of implementation of displaying the screened video image data on the video monitor in FIG. 1, which, as shown in FIG. 6, specifically includes the following steps.

In Step 310, the moving object foreground and the corresponding background meeting a screening condition are fused and encoded into a video stream.

The video monitoring device fuses the identified background and moving object foreground to generate a new video stream based on IP packets to describe extensible markup language (XML) files. The principle of video stream fusion and encoding is to first obtain the video data of the screened specific moving object foreground; then obtain the background corresponding to the video data of the screened specific moving object foreground, and then obtain a background identifier corresponding to the moving object foreground, herein the background identifier may be an angle identifier of the background corresponding to the moving object foreground, for example, the angle identifier of the background corresponding to a certain moving object foreground is 50 degrees; finally, fuse the screened moving object foreground and the corresponding background to form the video stream. For example, in the same background, the video data carried by the video stream only need to include video data of a specific moving object foreground and a corresponding background image, that is, the background of the video stream transmission only need to transmit a corresponding background image. Under the backgrounds in different angles, only multiple background images at the corresponding angles need to be transmitted, thereby greatly reducing the transmission amount of information, and greatly improving the efficiency of analysis processing.

In Step 320, the video stream is sent to the video monitor, the video stream is decoded by the video monitor and presented on an interactive interface for the user to monitor and view.

The video monitoring device sends the generated video stream to the video monitor, and the video stream is decoded by the video monitor and presented on the interactive interface for the user to monitor and view. Decoding the video stream includes: firstly decomposing the fused video stream according to the foreground and the background; then obtaining the corresponding background image according to the background identifier corresponding to the moving object foreground; and then combining the video data of the moving object foreground and the corresponding background in real time.

In the video monitoring method provided by the present embodiment, by analyzing and reconstructing video monitoring contents and generating the video stream according to the customized permissions of different types of member groups, on the one hand, the purpose of the personalized browsing and privacy protection of the customized content is achieved to better ensure the security of video monitoring, thereby protecting the privacy of the video monitoring contents; on the other hand, actual workload of monitoring personnel is greatly reduced without reducing user perception, the transmission bandwidth is saved.

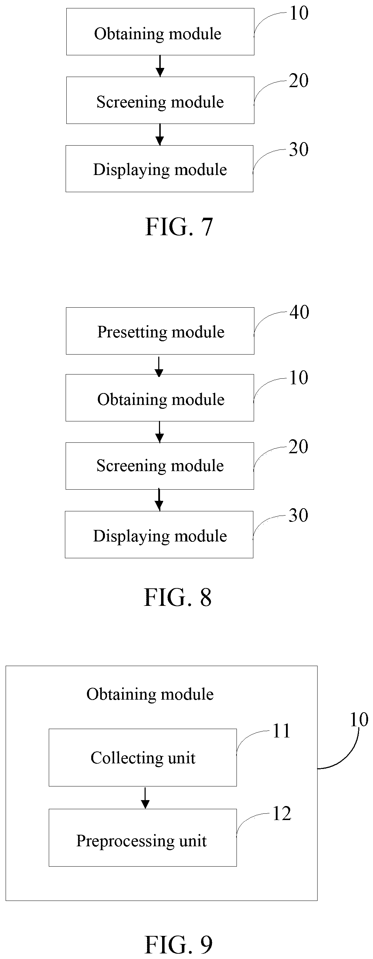

FIG. 7 is a composition structure of a first embodiment of a video monitoring device according to the present invention, which, as shown in FIG. 7, includes an obtaining module 10, a screening module 20 and a displaying module 30.

The obtaining module 10 is configured to obtain video image data and a group to which a member belongs.

The screening module 20 is configured to screen the obtained video image data according to a permission mapping table and the obtained group.

The displaying module 30 is configured to display the screened video image data on a video monitor.

The obtaining module 10 is specifically configured to: collect the video image data by a collection front-end. The collection front-end can be a 360-degree-rotatable luminous camera to intelligently collect video images at any angle in the night environment. An optical flow method or interframe difference method or background difference method can be used to dynamically extract a background and moving object foreground of the video image data, face recognition is performed by a facial feature method to identify a specific persons or animal in the moving objects, the moving objects are further tracked to obtain the video image data of a specific object for storing in a database. The video monitoring device logs in to a service processing server through a client administrator account of a WEB or application, and establishes different members and member groups to divide the different members into the corresponding member groups.

The screening module 20 of the video monitoring device is specifically configured to preset the permission mapping table and screens the video images via the service processing server according to permissions of corresponding member groups configured in a filtering rule of the permission mapping table. For example, the member groups may be divided into a member group 1, a member group 2 and a member group 3. The member group 1 is set to track only specific persons, the member group 2 is set to track only specific valuables, and the member group 3 is set to track only license plate numbers of users. There is no limit to the number of members in each member group, i.e., there may be no member joining the member group, or multiple members can join the member group. Each member may join a number of groups after authorization and authentication. For example, after authorization and authentication, a member A may join the member group 1, the member group 2 and the member group 3 separately, or may join the member group 1, the member group 2 and the member group 3 at the same time. If the ranking of the member A is high, the permission mapping table may be modified to change a permission of the located member group. The video monitoring device screens the video image data according to the filtering rule of the permission mapping table. For example, if the member A is divided into the member group 1, then video image data of a corresponding specific person will be screened according to the permission mapping table so that only the video image data of a corresponding specific person can be monitored within the video monitoring permission of the member A.

The displaying module 30 of the video monitoring device is configured to send the screened video image data to a customer server, and a video stream of the screened video image is decoded by the customer server, and then presented through an interactive interface of the video monitor for the user to monitor and view.

With the video monitoring method provided by the present embodiment, by reconstructing video monitoring contents and screening the video data required by a user according to the customization of different types of member groups, on the one hand, the purpose of the personalized browsing and privacy protection of the customized content is achieved to better ensure the security of video monitoring, thereby protecting the privacy of the video monitoring contents; on the other hand, actual workload of monitoring personnel is greatly reduced without reducing user perception, the transmission bandwidth is saved.

FIG. 8 is a composition structure of a second embodiment of a video monitoring device according to the present invention, which, as shown in FIG. 8, on the basis of the first embodiment, further includes a presetting module 40.

The presetting module 40 is configured to preset the permission mapping table, herein a permission corresponding to each member group is configured in a filtering rule of the permission mapping table.

The permission corresponding to each member group is configured in the filtering rule of the permission mapping table. Each member can correspond to multiple member groups such that each member can correspond to multiple permissions to form a many-to-many mapping. For example, the member group 1 is set to track only specific persons, the member group 2 is set to track only specific valuables, and the member group 3 is set to track only license plate numbers of users. If the member A corresponds to the member group 1 and the member group 2, videos of specific persons and specific valuables can be monitored. In addition, members with high ranking can modify the permission mapping table, and modify the permission of the corresponding member group. For example, when the member A has the highest ranking and is currently in the member group 2, the set permission of the member group 2 for tracking only specific valuables can be modified to the permission for tracking only specific animals.

In the video monitoring device provided by the present embodiment, by presetting the permission mapping table, screening the collected video image data, and screening out the video data required by the user according to the customization of different types of member groups, on the one hand, the purpose of the personalized browsing and privacy protection of the customized content is achieved to better ensure the security of video monitoring, thereby protecting the privacy of the video monitoring contents; on the other hand, actual workload of monitoring personnel is greatly reduced without reducing user perception, the transmission bandwidth is saved.

FIG. 9 is a composition structure of an obtaining module in FIG. 7. As shown in FIG. 9, the obtaining module 10 specifically includes a collecting unit 11 and a preprocessing unit 12.

The collecting unit 11 is configured to collect the video image data.

The preprocessing unit 12 is configured to preprocess the collected video image data.

The collection unit 11 of the video monitoring device collects the video data through the collection front end when receiving control instructions sent from the service processing server. The collection front end can be a 360-degree-rotatable luminous camera to intelligently collect video images at any angle in the night environment.

The preprocessing unit 12 of the video monitoring device preprocesses the collected video image data through the collection front end. For example, the optical flow method or interframe difference method or background difference method can be used to dynamically extract a background and moving object foreground of the video image data, face recognition is performed through the facial feature method to identify a person or animal in the moving objects, the moving objects are further tracked to obtain the video image data of the specific object for storing in the database. Moreover, collection is performed with respect to the backgrounds at different angles, and the background at an angle corresponding to video image data is stored in the database.

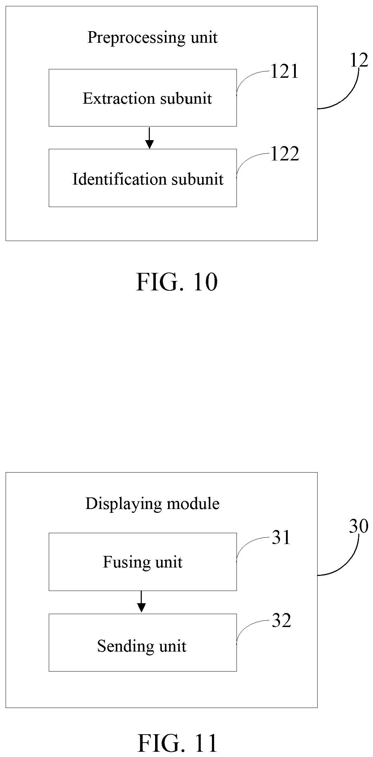

FIG. 10 is a composition structure of a preprocessing module in FIG. 9. As shown in FIG. 10, the preprocessing unit 12 specifically includes an extraction subunit 121 and an identification subunit 122.

The extraction subunit 121 is configured to extract a background and a moving object foreground of the collected video image data; and
The identification subunit 122 is configured to identify and annotate the extracted background and moving object foreground.

The extraction subunit 121 of the video monitoring device separates the foreground and the background of the current video image data by using a moving object detection method, such as the optical flow method, and extracts the foreground moving object to identify a contour of the moving object. It should be noted that the optical flow method is only an example here, and of course the present invention is not limited thereto, other methods, such as the interframe difference method or background difference method, can also be used.

The identification sub-unit 122 of the video monitoring device identifies and extracts the principal contour of the moving object, processes a preview frame sequence of a continuously moving object, and detects a possible foreground object by using an object detecting method for the preview frame sequence, and if the foreground object appears in a frame, finds its representative key feature points. The key feature points can be randomly generated, or be made of angular points, which are local maximum points of curvature on the principal contour and play a decisive role in grasping features of the principal contour. Once the contour features of the moving object are found, the shape of the object is roughly grasped. Features of the angular points are important features of the image. In various image features, the angular points have advantages of rotation invariability and not changing with illumination condition changing. In object recognition and object tracking, the amount of data involved in calculation can be reduced without loss of important grayscale information of the image, performing matching by using the features of the angular points can greatly improve the matching speed. For any subsequent two adjacent video frames, the optimal positions of the key feature points which appear in the previous frame, in the current frame are found to obtain position coordinates of the moving object in the current frame. This process is performed iteratively to achieve tracking of the moving object in the foreground, and separate the obtained foreground and background so as to filter some objects, screen out the FIG video image data, and identify the moving object in the foreground.

Further referring to FIG. 7, in the video monitoring device, on the basis of the first embodiment, the video module 20 is configured specifically to screen the background and moving object foreground of the video image data according to the permission corresponding to the member group configured in the filtering rule of the permission mapping table.

The screening module 20 of the video monitoring device obtains the permission of the corresponding member group from the filtering rule according to the preset permission mapping table, and screens the extracted background and moving object foreground according to the permission of the corresponding member group. For example, the member group 1 screens specific persons in the video image data, the member group 2 screens specific valuables in the video image data, and the member group 3 tracks license plate numbers of users in the video image data. Thus, the specific persons, cars and things are identified.

FIG. 11 is a composition structure of a displaying module in FIG. 7. As shown in FIG. 11, the displaying module 30 specifically includes a fusing unit 31 and a sending unit 32.

The fusing unit 31 is configured to fuse and encode the moving object foreground and the corresponding background meeting a screening condition into a video stream.

The sending unit 32 is configured to send the obtained video stream to the video monitor, the video stream is decoded by the video monitor and presented on an interactive interface for the user to monitor and view.

The fusion unit 31 of the video monitoring device is specifically configured to fuse the identified background and moving object foreground to generate a new video stream based on IP packets to describe extensible markup language (XML) files. The principle of video stream fusion and encoding is to first obtain the video data of the screened specific moving object foreground; then obtain the background corresponding to the video data of the screened specific moving object foreground, and then obtain a background identifier corresponding to the moving object foreground, herein the background identifier may be an angle identifier of the background corresponding to the moving object foreground, for example, the angle identifier of the background corresponding to a certain moving object foreground is 50 degrees; finally, fuse the screened moving object foreground and the corresponding background to form the video stream. For example, in the same background, the video data carried by the video stream only need to include video data of a specific moving object foreground and a corresponding background image, that is, the background of the video stream transmission only need to transmit a corresponding background image. Under the background in different angles, only multiple background images at the corresponding angles need to be transmitted, thereby greatly reducing the transmission amount of information, and greatly improving the efficiency of analysis processing.

The sending unit 32 of the video monitoring device is configured specifically to send the generated video stream to the video monitor, and the video stream is decoded by the video monitor and presented on the interactive interface for the user to monitor and view. Decoding the video stream includes: firstly decomposing the fused video stream according to the foreground and the background; then obtaining the corresponding background image according to the background identifier corresponding to the moving object foreground; and then combining the video data of the moving object foreground and the corresponding background in real time.

In the video monitoring device provided by the present embodiment, by analyzing and reconstructing video monitoring contents and generating the video stream according to the customized permissions of different types of member groups, on the one hand, the purpose of the personalized browsing and privacy protection of the customized content is achieved to better ensure the security of video monitoring, thereby protecting the privacy of the video monitoring contents; on the other hand, actual workload of monitoring personnel is greatly reduced without reducing user perception, the transmission bandwidth is saved.

The above is only some embodiments of the present invention, and is not intended to limit the patent scope of the present invention. Any equivalent structure or equivalent process transformation made by using contents of the specification and the accompanying drawings of the present invention, directly or indirectly used in other related technical fields, should be included within the patent protection scope of the present invention.

### Industrial Applicability

The embodiments of the present invention propose the video monitoring method and device, the method includes obtaining a video image data and a group to which a member belongs; screening the obtained video image data according to a permission mapping table and the obtained group; and displaying the screened video image data on a video monitor. With the embodiments of the present invention, by reconstructing video monitoring contents and generating the video data required by a user according to the customization of different types of member groups, on the one hand, the purpose of the personalized browsing and privacy protection of the customized content is achieved to better ensure the security of video monitoring, thereby protecting the privacy of the video monitoring contents; on the other hand, actual workload of monitoring personnel is greatly reduced without reducing user perception, the transmission bandwidth is saved.

## Claims

1. A video monitoring method, comprising:
obtaining video image data and a group to which a member belongs;
screening the obtained video image data according to a permission mapping table and the obtained group; and
displaying the screened video image data on a video monitor.

2. The video monitoring method according to claim 1, wherein before obtaining the video image data, the method further comprises: presetting the permission mapping table;
wherein a permission corresponding to each member group is configured in a filtering rule of the permission mapping table.

3. The video monitoring method according to claim 1, wherein obtaining the video image data comprises: collecting the video image data; and
preprocessing the collected video image data.

4. The video monitoring method according to claim 3, wherein preprocessing the collected video image data comprises:
extracting a background and a moving object foreground of the collected video image data; and
identifying and annotating the extracted background and moving object foreground on a video image.

5. The video monitoring method according to claim 1 or 4, wherein screening the obtained video image data comprises:
screening the background and moving object foreground of the video image data according to the permission of the corresponding member group configured in the filtering rule of the permission mapping table.

6. The video monitoring method according to claim 5, wherein displaying the screened video image data on the video monitor comprises:
fusing and encoding the moving object foreground and the corresponding background meeting a screening condition into a video stream; and
sending the video stream to the video monitor for displaying.

7. A video monitoring device, comprising at least:
an obtaining module configured to obtain video image data and a group to which a member belongs;
a screening module configured to screen the obtained video image data according to a permission mapping table and the obtained group; and
a displaying module configured to display the screened video image data on a video monitor.

8. The video monitoring device according to claim 7, further comprising:
a presetting module configured to preset the permission mapping table, wherein a permission corresponding to each member group is configured in a filtering rule of the permission mapping table.

9. The video monitoring device according to claim 7, wherein the obtaining module comprises a collecting unit and a preprocessing unit, wherein
the collecting unit is configured to collect the video image data; and
the preprocessing unit is configured to preprocess the collected video image data.

10. The video monitoring device according to claim 9, wherein the preprocessing unit comprises at least an extraction subunit and an identification subunit, wherein
the extraction subunit is configured to extract a background and a moving object foreground of the collected video image data; and
the identification subunit is configured to identify and annotate the extracted background and moving object foreground.

11. The video monitoring device according to claim 7 or 8, wherein the screening module is specifically configured to:
screen the background and moving object foreground of the video image data according to the permission of the corresponding member group configured in the filtering rule of the permission mapping table.

12. The video monitoring device according to claim 11, wherein the displaying module comprises at least a fusing unit and a sending unit, wherein
the fusing unit is configured to fuse and encode the moving object foreground and the corresponding background meeting a screening condition into a video stream; and
the sending unit is configured to send the obtained video stream to the video monitor for displaying.
